(19) Europäisches Patentamt
European Patent Office
Office européen des brevets

(11) EP 3 073 643 B1

(12) **FASCICULE DE BREVET EUROPEEN**

(45) Date de publication et mention de la délivrance du brevet:
**22.11.2017 Bulletin 2017/47**

(51) Int Cl.:
***H04B 3/54*** *(2006.01)*

(21) Numéro de dépôt: **16161865.7**

(22) Date de dépôt: **23.03.2016**

(54) **PROCÉDÉ DE TRANSMISSION D'UN SIGNAL DE COMMUNICATION PAR COURANT PORTEUR EN LIGNE**

VERFAHREN ZUR ÜBERTRAGUNG EINES STROMLEITUNGSKOMMUNIKATIONSSIGNALS

METHOD FOR TRANSMITTING A POWERLINE COMMUNICATION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2015 FR 1552482**

(43) Date de publication de la demande:
**28.09.2016 Bulletin 2016/39**

(73) Titulaire: **SAGEMCOM ENERGY & TELECOM SAS**
**92500 Rueil-Malmaison (FR)**

(72) Inventeurs:
- **TEBOULLE, Henri**
**92500 RUEIL MALMAISON (FR)**
- **RAZAZIAN, Kaveh**
**92500 RUEIL MALMAISON (FR)**
- **GRINCOURT, Christophe**
**92500 RUEIL MALMAISON (FR)**
- **HERGAULT, Stéphane**
**92500 RUEIL MALMAISON (FR)**

(74) Mandataire: **Le Guen-Maillet**
**5, place de Newquay**
**BP 70250**
**35802 Dinard Cedex (FR)**

(56) Documents cités:
**US-A- 5 777 544 US-B1- 6 229 432**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 073 643 B1

Printed by Jouve, 75001 PARIS (FR)

## Description

La présente invention concerne un procédé de transmission d'un signal de communication par courant porteur en ligne comprenant des données à transmettre, généré à partir d'un signal d'alimentation électrique alternatif et d'un signal représentatif desdites données, et un dispositif mettant en oeuvre le procédé.

Les communications par courants porteurs en ligne CPL (« PowerLine Communications (PLC) » en terminologie anglo-saxonne) se développent, notamment dans le cadre des réseaux d'alimentation électrique de type AMM (Gestion de mesure automatique, « Automated Meter Management » en terminologie anglo-saxonne). Des réseaux de communication sont ainsi implémentés au-dessus de réseaux d'alimentation électrique pour la collecte automatisée, auprès de compteurs électriques intelligents (« smart meters » en anglais), de données de relevés de consommation énergétique. Les communications par courants porteurs utilisent, par exemple, des protocoles de communication tels que le protocole G3-PLC (CPL de troisième génération: « Third Génération PLC » en terminologie anglo-saxonne. ITU-T G.9903) ou PRIME (Evolution des mesures intelligentes par courant porteur, « PoweRline Intelligent Metering Evolution » en terminology anglo-saxonne).

Un principe des communications CPL consiste à superposer à un signal d'alimentation électrique alternatif, un signal de plus haute fréquence et de faible énergie représentatif de données à transmettre. Les signaux d'alimentation électrique alternatifs basse tension, haute tension et très haute tension rencontrés respectivement sur des réseaux d'alimentation électrique basse tension, haute tension et très haute tension peuvent être utilisés. Par ailleurs, il est possible de mettre en oeuvre des communications CPL entre des dispositifs situés sur des réseaux d'alimentation électrique de types différents. C'est ainsi, par exemple, qu'un premier dispositif de communication CPL situé sur un réseau d'alimentation électrique haute tension peut communiquer avec un second dispositif de communication CPL situé sur un réseau d'alimentation électrique basse tension, les deux réseaux étant reliés par au moins un transformateur haute tension/basse tension (HT/BT). La présence d'un transformateur de tension entre des dispositifs CPL n'empêche donc pas les communications entre les deux dispositifs. Il est connu toutefois qu'un passage d'un signal d'alimentation électrique par un transformateur de tension n'est pas sans conséquence sur le signal représentatif de données superposé au signal d'alimentation électrique alternatif transformé. C'est ainsi qu'une transformation d'un signal d'alimentation électrique alternatif haute tension (respectivement basse tension) en un signal d'alimentation électrique alternatif basse tension (respectivement haute tension) peut entraîner des pertes ou des erreurs dans le signal représentatif de données. Un exemple d'état de la technique est le brevet US 5777544. Il est souhaitable de pallier ces différents inconvénients de l'état de la technique.

Il est notamment souhaitable de proposer une solution permettant de limiter les pertes et les erreurs lors d'une communication CPL entre deux dispositifs CPL situés dans deux réseaux d'alimentation électrique de types différents reliés par un transformateur de tension.

Il est notamment souhaitable de fournir une solution qui soit simple à mettre en oeuvre et à faible coût.

Selon un premier aspect de la présente invention, la présente invention concerne un procédé de transmission d'un signal de communication par courant porteur en ligne comprenant des données à transmettre, généré à partir d'un signal d'alimentation électrique alternatif et d'un signal représentatif desdites données, le procédé comprenant, préalablement à la génération du signal de communication par courant porteur en ligne: obtenir une information représentative d'un instant ultérieur de passage par zéro du signal d'alimentation électrique alternatif; identifier une sous partie du signal représentatif desdites données, ladite sous partie étant destinée à être combinée au signal d'alimentation électrique alternatif dans une fenêtre temporelle incluant ledit instant de passage par zéro ; modifier le signal représentatif desdites données en appliquant un gain prédéfini à ladite sous partie.

De cette manière, un gain est appliqué aux sous parties du signal représentatif des données subissant une atténuation correspondant aux sous parties du signal représentatif des données destinées à être combinées au signal d'alimentation électrique alternatif au voisinage de passages par zéro du signal d'alimentation électrique alternatif. On obtient alors un meilleur rapport signal sur bruit pour le signal représentatif des données dans lesdites sous parties.

Selon un mode de réalisation, le procédé comprend en outre une conversion numérique vers analogique du signal représentatif des données suite à l'application du gain sur ladite sous partie.

Selon un mode de réalisation, le procédé comprend, en outre, une étape de conversion numérique vers analogique, l'application du gain sur ladite sous partie se faisant après la conversion numérique vers analogique, le signal représentatif desdites données étant un signal analogique résultant de la conversion numérique vers analogique d'un signal numérique représentatif desdites données.

Selon un mode de réalisation, une valeur de gain appliquée à un élément de ladite sous partie dépend d'une position dudit élément par rapport à un point milieu de ladite sous partie de sorte qu'une première valeur de gain appliquée à un premier élément de ladite sous partie est inférieure ou égale à une seconde valeur de gain appliquée à un deuxième élément de ladite sous partie lorsque le premier élément est plus éloigné dudit point milieu que le second élément.

Selon un mode de réalisation, le point milieu est décalé d'une valeur prédéfinie par rapport au passage par zéro.

Selon un mode de réalisation, le point milieu correspond au passage par zéro.

Selon un mode de réalisation, ladite sous partie a une durée prédéfinie inférieure ou égale à un quart de période du signal d'alimentation électrique alternatif.

Selon un deuxième aspect de la présente invention, la présente invention concerne un dispositif pour transmettre un signal de communication par courant porteur en ligne comprenant des données à transmettre, généré à partir d'un signal d'alimentation électrique alternatif et d'un signal représentatif desdites données, le dispositif comprenant: un module d'analyse pour obtenir une information représentative d'un instant ultérieur de passage par zéro du signal d'alimentation électrique alternatif ; un module d'identification pour identifier une sous partie du signal représentatif desdites données, ladite sous partie étant destinée à être combinée au signal d'alimentation électrique alternatif dans une fenêtre temporelle incluant ledit instant de passage par zéro ; un module de modification pour modifier le signal représentatif desdites données en appliquant un gain prédéfini à ladite sous partie ; et, un module de génération pour générer le signal de communication par courant porteur en ligne.

Selon un mode de réalisation, le dispositif comprend un module de conversion numérique vers analogique situé en aval du module de modification et recevant le signal représentatif des données modifié, ou un module de conversion numérique vers analogique situé en amont du module de modification et fournissant au module de modification le signal représentatif des données sous forme d'un signal analogique issu d'une conversion d'un signal numérique représentatif des données.

Selon un troisième aspect de la présente invention, la présente invention concerne un programme d'ordinateur, comprenant des instructions pour mettre en oeuvre, par un dispositif, le procédé selon le premier aspect lorsque la conversion numérique vers analogique du signal représentatif des données se fait suite à l'application du gain, lorsque ledit programme est exécuté par un processeur dudit dispositif.

Selon un quatrième aspect de la présente invention, la présente invention concerne des moyens de stockage, stockant un programme d'ordinateur comprenant des instructions pour mettre en oeuvre, par un dispositif, le procédé selon le premier aspect lorsque la conversion numérique vers analogique du signal représentatif des données se fait suite à l'application du gain, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un contexte dans lequel l'invention peut être mise en oeuvre ;
- la Fig. 2 illustre schématiquement un effet sur un signal représentatif de données d'une transformation par un transformateur de tension d'un signal d'alimentation électrique alternatif sur lequel est superposé le signal représentatif de données;
- la Fig. 3 illustre schématiquement un premier exemple de dispositif de type concentrateur de données selon l'invention;
- la Fig. 4 illustre schématiquement un exemple d'architecture matérielle d'un dispositif de traitement compris dans un concentrateur de données ;
- la Fig. 5 illustre schématiquement un procédé selon l'invention mis en oeuvre par un dispositif de type concentrateur de données selon l'invention ;
- la Fig. 6 illustre schématiquement un deuxième exemple de dispositif de type concentrateur de données selon l'invention ; et,
- la Fig. 7 illustre schématiquement des paramètres d'un gain appliqué à un signal représentatif de données au voisinage d'instants de passages par zéro du signal d'alimentation électrique alternatif.

L'invention est décrite par la suite dans un contexte d'une communication CPL entre un concentrateur de données situé sur un réseau d'alimentation électrique haute tension et un dispositif CPL, tel qu'un compteur électrique, situé sur un réseau d'alimentation électrique basse tension. L'invention s'applique toutefois dans un contexte plus large de communications CPL entre deux dispositifs CPL situés sur des réseaux d'alimentation électrique différents séparés par un transformateur de tension. L'invention s'applique par ailleurs lorsque, lors d'une communication CPL, un signal représentatif de données superposé à un signal d'alimentation électrique alternatif subit une atténuation périodique ayant une période mesurable.

La Fig. 1 illustre schématiquement un contexte dans lequel l'invention peut être mise en oeuvre. La Fig. 1 représente un réseau d'alimentation électrique 1 dans lequel sont connectés un concentrateur de données 4, un transformateur HT/BT 3 et un dispositif CPL 2. Le concentrateur de données 4 est situé sur une sous partie du réseau d'alimentation électrique 1 transportant des signaux d'alimentation électrique haute tension. Le dispositif CPL 2 est situé sur une sous partie du réseau d'alimentation électrique 1 transportant des signaux d'alimentation électrique basse tension. Le concentrateur de données 4 et le dispositif CPL 2 communiquent par des signaux de communication CPL, en utilisant par exemple les protocoles G3-PLC ou PRIME.

Dans un mode de réalisation, le concentrateur de données 4 communique avec un système d'information central 6 par l'intermédiaire d'un réseau de communication 5, tel que le réseau internet, un réseau radio (exemple : GPRS) ou un réseau de communication par satellite. Le système d'information central 6 est par exemple connecté à une pluralité de concentrateurs de données du même type que le concentrateur de données 6 et permet une gestion de cette pluralité de concentrateurs de données.

Dans un mode de réalisation, le dispositif CPL 2 est un compteur électrique intelligent.

La Fig. 2 illustre schématiquement un effet sur un signal représentatif de données d'une transformation par un transformateur de tension d'un signal d'alimentation électrique alternatif sur lequel est superposé le signal représentatif de données.

Dans la Fig. 2, une courbe 20 représente des variations d'une tension d'un signal d'alimentation électrique alternatif, ici sinusoïdal. Une courbe 21 représente une enveloppe supérieure des tensions d'un signal analogique représentatif de données superposé au signal d'alimentation électrique 20. Une courbe 22 représente une enveloppe inférieure des tensions dudit signal analogique représentatif de données superposé au signal d'alimentation électrique 20. On remarque que ledit signal analogique représentatif des données subit des atténuations cycliques régulières. Ces atténuations anormales dudit signal analogique apparaissent dans des sous parties dudit signal analogique correspondant à des instants de passages par zéro, notés ZC (« zero-crossing » en terminologie anglo-saxonne), du signal d'alimentation électrique alternatif, ce qui explique le caractère cyclique régulier de ces atténuations. Un exemple d'un voisinage englobant un instant de passage par zéro du signal d'alimentation électrique alternatif est situé entre la ligne verticale 23 et la ligne verticale 24. Des observations ont montré que ces atténuations étaient provoquées par la transformation haute tension / basse tension. Ces atténuations entraînent une forte diminution d'un rapport signal sur bruit dudit signal analogique et par conséquent un risque accru d'erreurs de transmission. Par ailleurs, il a été constaté que la transformation haute tension / basse tension provoquait une augmentation d'un bruit impulsionnel subi par ledit signal analogique dans des sous parties dudit signal analogique correspondant à des pics de tension du signal d'alimentation électrique alternatif, tels que les pics de tension 25 et 26.

L'invention vise à rééquilibrer le rapport signal sur bruit dans des sous parties d'un signal représentatif de données superposé à un signal d'alimentation électrique alternatif correspondant à des instants de passage par zéro du signal d'alimentation électrique alternatif, sans pour autant accentuer le bruit impulsionnel subi par ledit signal représentatif de données dans des sous parties du signal représentatif des données correspondant à des pics de tension du signal d'alimentation électrique alternatif. Une accentuation du bruit impulsionnel peut entrainer des phénomènes de saturation du signal représentatif des données.

L'invention est mise en oeuvre dans le concentrateur de données 4.

La Fig. 3 illustre schématiquement un premier exemple de mise en oeuvre du concentrateur de données 4.

Le concentrateur de données 4 comprend un module de traitement 40, un module de conversion numérique vers analogique 41, un module d'amplification de puissance 42, un module de génération 43 et un module d'analyse 44. Le module de traitement 40, que nous détaillons par la suite en relation avec la Fig. 4 est apte à obtenir un signal numérique représentatif de données à transmettre dans un signal de communication CPL. L'obtention dudit signal numérique peut être interne au module de traitement 40, i.e. le module de traitement 40 génère ledit signal numérique, ou le signal numérique peut être obtenu d'un dispositif externe, par exemple, du système de communication 6 par l'intermédiaire du réseau de communication 5. Le module de traitement 40 met en oeuvre un procédé que nous détaillons par la suite en relation avec la Fig. 5.

Dans l'exemple du concentrateur de données de la Fig. 3, ledit signal numérique est modifié par le module de traitement 40. Le signal numérique modifié est ensuite fourni au module de conversion numérique vers analogique 41 qui génère un signal analogique représentatif des données à transmettre à partir dudit signal numérique. Le signal analogique ainsi généré est ensuite fourni au module d'amplification de puissance 42 qui amplifie ledit signal analogique. Le signal analogique amplifié est ensuite fourni au module de génération 43 qui combine ledit signal analogique amplifié au signal d'alimentation électrique alternatif afin de générer le signal de communication CPL comprenant lesdites données à transmettre.

Le module d'analyse 44 reçoit le signal d'alimentation électrique alternatif et procède à une analyse de ce signal. Lors de cette analyse, le module d'analyse 44 recherche des instants de passage par zéro dans le signal d'alimentation électrique alternatif et transmet des informations représentatives de ces instants au module de traitement 40 qui les utilise dans la mise en oeuvre du procédé décrit en relation avec la Fig. 5.

La Fig. 4 illustre schématiquement un exemple d'architecture matérielle du dispositif de traitement 40 compris dans un concentrateur de données 4.

Selon l'exemple d'architecture matérielle représenté à la Fig. 4, le module de traitement 40 comprend alors, reliés par un bus de communication 400 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage telle qu'un disque dur ou un lecteur de support de stockage, tel qu'un lecteur de cartes SD (« Secure Digital » en anglais) 404 ; au moins une interface de communication 405 permettant au module de traitement 40 de fournir un signal numérique au module de conversion numérique vers analogique 41 et de recevoir un signal numérique par exemple en provenance du système d'information 6 et des informations représentatives de passages par zéro du signal d'alimentation électrique alternatif de la part du module d'analyse 44.

Dans l'exemple du concentrateur de données 4 décrit en relation avec la Fig. 3, le module de traitement 40 comprend un module de modification 406 apte à modifier le signal numérique représentatif desdites données en appliquant un gain prédéfini sur une sous partie dudit signal numérique représentatif des données destinée à être combinée au signal d'alimentation électrique alternatif dans une fenêtre temporelle incluant un instant de passage par zéro.

Le processeur 401 est capable d'exécuter des instructions chargées dans la RAM 402 à partir de la ROM 403, d'une mémoire externe (non représentée), d'un support de stockage (tel qu'une carte SD), ou d'un réseau de communication. Lorsque le module de traitement 40 est mis sous tension, le processeur 401 est capable de lire de la RAM 402 des instructions et de les exécuter. Ces instructions forment un programme d'ordinateur causant la mise en oeuvre, par le processeur 401, d'une partie des étapes du procédé décrit ci-après en relation avec la Fig. 5 comprenant, dans le cas de l'exemple de mise en oeuvre du concentrateur de données 4 décrit en relation avec la Fig. 3, des étapes 50 à 54 et dans le cas d'un deuxième exemple de mise en oeuvre du concentrateur de données 4 décrit en relation avec la Fig. 6, des étapes 50 à 53.

Les étapes 50 à 54 (ou 50 à 53) décrites ci-après en relation avec la Fig. 5 peuvent être implémentées sous forme logicielle par exécution d'un ensemble d'instructions par une machine programmable, par exemple un DSP (« Digital Signal Processor » en anglais) ou un microcontrôleur, ou être implémentées sous forme matérielle par une machine ou un composant dédié, par exemple un FPGA (« Field-Programmable Gate Array » en anglais) ou un ASIC (« Application-Specific Integrated Circuit » en anglais).

La Fig. 5 illustre schématiquement un procédé selon l'invention mis en oeuvre par le concentrateur de données 4.

Lors de l'étape 50, le module de traitement 40 obtient du module d'analyse 44 une information représentative d'un instant $T_{ZC}$ correspondant au dernier passage par zéro du signal d'alimentation électrique. Cette information représentative de l'instant $T_{ZC}$ est combinée à d'autres informations représentatives d'instants de passage par zéro du signal d'alimentation électrique alternatif reçues précédemment par le module de traitement 40 pour déterminer finement une période $\tau$ de passage par zéro du signal d'alimentation électrique alternatif.

Lors de l'étape 51, le module de traitement 40 estime un instant ultérieur de passage par zéro du signal d'alimentation électrique alternatif $T_{ZC}^{E}$ correspondant, par exemple, au prochain passage par zéro du signal d'alimentation électrique alternatif, à partir de l'instant $T_{ZC}$ et de la période $\tau$.

Dans une étape 52, le module de traitement 40 obtient des paramètres d'un gain à appliquer à une sous partie du signal représentatif des données (ici le signal numérique), ladite sous partie étant destinée à être combinée au signal d'alimentation électrique alternatif dans une fenêtre temporelle incluant un instant de passage par zéro du signal d'alimentation électrique alternatif. On note que lorsque le signal représentatif des données est un signal numérique, une étape de conversion numérique vers analogique du signal numérique représentatif des données est mise en oeuvre par le module de conversion numérique vers analogique 41 préalablement à la combinaison.

Un signal numérique est un signal constitué d'une suite d'échantillons, chaque échantillon ayant une valeur représentée sous format binaire. Appliquer un gain à un signal numérique consiste à rehausser la valeur de chaque échantillon de ce signal numérique. On obtient un rehaussement de la valeur d'un échantillon en multipliant par un gain déterminé supérieur à 1 la représentation binaire de ladite valeur.

Les paramètres du gain comprennent une durée $T_0$ de ladite fenêtre temporelle, une valeur de décalage $\Delta t$ indiquant un décalage d'un point milieu de ladite fenêtre temporelle par rapport à l'instant de passage par zéro du signal d'alimentation électrique alternatif, et une fonction de gain indiquant comment doit être amplifiée une sous partie du signal représentatif des données destinée à être combinée au signal d'alimentation électrique alternatif dans ladite fenêtre temporelle.

Il est préférable de n'appliquer un gain que sur des sous parties du signal représentatif des données concernées par une atténuation, i.e. des sous parties du signal représentatif des données destinées à être combinées au signal d'alimentation électrique au voisinage d'un instant de passage par zéro du signal d'alimentation électrique alternatif. Il est préférable de plus d'éviter d'appliquer un gain au signal représentatif des données dans des sous parties dudit signal concernées par une augmentation du bruit impulsionnel, i.e. dans des sous parties dudit signal destinées à être combinées au signal d'alimentation électrique alternatif au voisinage d'un pic de tension dans le signal d'alimentation électrique alternatif. Pour ce faire, la durée $T_0$ est ajustée de manière à n'appliquer un gain au signal représentatif des données qu'aux sous parties destinées à être combinées au signal d'alimentation électrique alternatif au voisinage d'un instant de passages par zéro du signal d'alimentation électrique alternatif.

Dans un mode de réalisation, le signal d'alimentation électrique alternatif ayant une période $T_{alim}$, la durée $T_0$ est inférieure ou égale à $\frac{T_{alim}}{4}$.

La valeur de décalage $\Delta t$ permet de prendre en compte des décalages entre les instants de passage par zéro du signal d'alimentation électrique alternatif et les sous parties du signal représentatif des données subissant une atténuation. Il a été observé en effet que les points milieu desdites sous parties étaient généralement décalés par rapport aux instants de passage par zéro du signal d'alimentation électrique alternatif. Ces décalages peuvent par exemple être provoqués par des impédances du transformateur HT/BT 3. Dans un mode de réalisation, la valeur du décalage $\Delta t$ est égale à la valeur « 0 » de sorte que le point milieu de la fenêtre temporelle correspond à l'instant de passage par zéro du signal d'alimentation électrique alternatif.

La fonction de gain *g(t)* définit quel gain est appliqué sur chaque élément du signal représentatif des données de la sous partie du signal représentatif des données destinée à être combinée au signal d'alimentation électrique au voisinage d'un instant de passage par zéro du signal d'alimentation électrique alternatif. Dans un mode de réalisation, la fonction de gain est uniforme de sorte qu'un gain identique est appliqué à chaque élément de ladite sous partie.

Lors de l'étape 53, le module de traitement 40 identifie dans le signal représentatif des données, la sous partie du signal représentatif des données destinée à être combinée au signal d'alimentation électrique alternatif dans une fenêtre temporelle de durée $T_0$ incluant l'instant de passage par zéro $T_{ZC}^{E}$.

Lors de l'étape 54, le module de traitement 40 modifie le signal représentatif des données en appliquant un gain, correspondant à la fonction de gain *g(t)*, à la sous partie identifiée. Dans le cas où le signal représentatif des données est un signal numérique, les éléments du signal représentatif des données sont des échantillons et le gain à appliquer à chaque échantillon est déterminé à partir de la fonction de gain *g(t)*.

Dans une étape 55, le signal représentatif des données est combiné au signal d'alimentation électrique par le module de génération 43 afin de générer le signal de communication CPL, après une étape préalable de conversion numérique vers analogique mise en oeuvre par le module de conversion numérique vers analogique 41 et une étape préalable d'amplification de puissance mise en oeuvre par le module d'amplification de puissance 42.

Dans un mode de réalisation, les paramètres du gain $T_0$, $\Delta t$ et *g(t)* sont prédéfinis et sont stockés dans l'unité de stockage 404 du module de traitement 40 et ne sont jamais mis à jour.

Dans un mode de réalisation, les paramètres du gain $T_0$, $\Delta t$ et *g(t)* sont transmis au module de traitement 40 par le système d'information central 6. Dans ce cas, les paramètres du gain peuvent être mis à jour régulièrement ou sur demande d'un opérateur connecté au système d'information central 6.

Dans un mode de réalisation, la valeur de décalage $\Delta t$ est déterminée lors de tests sur des signaux de communication CPL en mesurant des décalages entre des points milieu de sous parties de signaux représentatifs de données ayant subi une atténuation et des instants de passage par zéro correspondants d'un signal d'alimentation électrique alternatif transportant lesdits signaux représentatifs des données.

Il a été constaté que les atténuations au voisinage d'un passage par zéro du signal d'alimentation électrique alternatif ne sont pas constantes mais varient en fonction d'un éloignement par rapport à l'instant de passage par zéro. Dans un mode de réalisation, la fonction de gain *g(t)* est variable de telle sorte qu'une valeur de gain appliquée à un élément de ladite sous partie dépend d'une position dudit élément par rapport au point milieu de ladite sous partie de sorte qu'une première valeur de gain appliquée à un premier élément de ladite sous partie est inférieure ou égale à une seconde valeur de gain appliquée à un deuxième élément de ladite sous partie lorsque le premier élément est plus éloigné dudit point milieu que le second élément. De cette manière un gain plus important peut être appliqué sur les éléments du signal représentatifs des données les plus proches du point milieu. Lorsque la fonction *g(t)* est variable, le gain à appliquer à un échantillon dépend donc de la position dudit échantillon dans la sous partie.

La Fig. 7 illustre schématiquement un exemple de paramètres d'un gain $T_0$, $\Delta t$ et *g(t)* appliqué au signal représentatif de données au voisinage d'instants de passages par zéro du signal d'alimentation électrique alternatif.

Un instant de passage par zéro du signal d'alimentation électrique alternatif $T_{ZC}^{E}$ estimé par le module de traitement 40 est représenté. Dans l'exemple de la Fig. 7, une fonction de gain *g(t)* 70, définissant un gain constant de valeur G sur la durée $T_0$, est utilisée. Par conséquent, un gain G est appliqué à chaque échantillon du signal représentatif des données destiné à être combiné au signal d'alimentation électrique alternatif entre un instant $T_{ZC}^{E} - \frac{T_0}{2} + \Delta t$ et $T_{ZC}^{E} + \frac{T_0}{2} + \Delta t$. Dans l'exemple de la Fig. 7, la valeur de décalage est égale à la valeur « 0 » de sorte que le point milieu de la fenêtre temporelle bornée par les instants $T_{ZC}^{E} - \frac{T_0}{2} + \Delta t$ et $T_{ZC}^{E} + \frac{T_0}{2} + \Delta t$ correspond à l'instant $T_{ZC}^{E}$.

Dans le premier exemple de concentrateur de données 4 décrit en relation avec la Fig. 3, le module de modification 406 est interne au module de traitement 40. Dans un mode de réalisation, le module de modification 406 pourrait être un module externe au module de traitement 40. Le module de modification recevrait alors des instructions du module de traitement 40 lui indiquant où et comment appliquer un gain au signal représentatif des données. La mise en oeuvre du procédé décrit en relation avec la Fig. 5 serait quasiment identique. Le module de modification externe pourrait être placé en aval du module de traitement 40 et en amont du module de conversion numérique vers analogique 41. Dans ce cas, le module de modification reçoit le signal représentatif des données et les paramètres du gain du module de communication 405 et non plus du bus de communication 400.

La **Fig. 6** illustre schématiquement un deuxième exemple de concentrateur de données 4 selon l'invention. Dans l'exemple de la Fig. 6, un module de modification 45 est situé en aval du module de conversion numérique vers analogique 41 et en amont du module d'amplification de puissance 42. Le module de modification 45 est différent du module de modification 406 car il doit appliquer un gain à des signaux analogiques représentatifs des données correspondant à un résultat d'une conversion numérique vers analogique du signal numérique représentatif de données fourni par le module de traitement 40. Les étapes 50 à 53 du procédé décrit en relation avec la Fig. 5 restent inchangées et sont mises en oeuvre par le module de traitement 40. L'étape 54, quant à elle, est mise en oeuvre par le module de modification 45. Pour ce faire, le module de traitement 40 contrôle le gain du module de modification 45 en y appliquant la fonction de gain *g(t).* Un gain analogique selon la fonction de gain *g(t)* est alors appliqué par le module de modification 45 au signal analogique représentatif des données sur la fenêtre temporelle bornée par les instants $T_{ZC}^{E} - \frac{T_0}{2} + \Delta t$ et $T_{ZC}^{E} + \frac{T_0}{2} + \Delta t$.

L'invention a été décrite jusque-là dans le cadre d'une transmission d'un signal de communication CPL depuis le concentrateur de données 4 situé sur le réseau haute tension vers le dispositif CPL 2 situé sur le réseau basse tension. Dans ce cas, l'invention est mise en oeuvre par le concentrateur de données 4. Toutefois, l'invention s'applique aussi dans le cadre d'une transmission d'un signal de communication CPL depuis le dispositif CPL 2 vers le concentrateur de données 4. Dans ce cas, l'invention est mise en oeuvre par le dispositif CPL 2. Le dispositif CPL 2 comprend alors des modules 40 à 44 tels que décrits en relation avec la Fig. 3 ou des modules 40 à 45 tels que décrits en relation avec la Fig. 6. En effet, des observations ont montré que des atténuations similaires se produisaient aussi dans le cas d'une transformation basse tension / haute tension mise en oeuvre par un transformateur HT/BT. On note que les transmissions de signaux de communication CPL depuis le concentrateur de données 4 vers le dispositif CPL 2 et les transmissions de signaux de communication CPL depuis le dispositif CPL 2 vers le concentrateur de données 4 peuvent être simultanées. Ainsi, l'invention peut être mise en oeuvre simultanément par le concentrateur de données 4 et le dispositif CPL 2.

## Revendications

**1.** Procédé de transmission d'un signal de communication par courant porteur en ligne comprenant des données à transmettre, généré à partir d'un signal d'alimentation électrique alternatif et d'un signal représentatif desdites données **caractérisé en ce que** le procédé comprend, préalablement à la génération du signal de communication par courant porteur en ligne:

obtenir (50, 51) une information représentative d'un instant ultérieur de passage par zéro du signal d'alimentation électrique alternatif ;
identifier (52, 53) une sous partie du signal représentatif desdites données, ladite sous partie étant destinée à être combinée au signal d'alimentation électrique alternatif dans une fenêtre temporelle incluant ledit instant de passage par zéro ;
modifier (54) le signal représentatif desdites données en appliquant un gain prédéfini à ladite sous partie.

**2.** Procédé selon la revendication 1, **caractérisé en ce que** le procédé comprend en outre une conversion numérique vers analogique du signal représentatif des données suite à l'application du gain sur ladite sous partie.

**3.** Procédé selon la revendication 1, **caractérisé en ce que** le procédé comprend en outre une étape de conversion numérique vers analogique et **en ce que** l'application du gain sur ladite sous partie se fait après la conversion numérique vers analogique, le signal représentatif desdites données étant un signal analogique résultant de la conversion numérique vers analogique d'un signal numérique représentatif desdites données.

**4.** Procédé selon la revendication 1, 2 ou 3, **caractérisé en ce qu'**une valeur de gain appliquée à un élément de ladite sous partie dépend d'une position dudit élément par rapport à un point milieu de ladite sous partie de sorte qu'une première valeur de gain appliquée à un premier élément de ladite sous partie est inférieure ou égale à une seconde valeur de gain appliquée à un deuxième élément de ladite sous partie lorsque le premier élément est plus éloigné dudit point milieu que le second élément.

**5.** Procédé selon la revendication 4, **caractérisé en ce que** le point milieu est décalé d'une valeur prédéfini par rapport au passage par zéro.

**6.** Procédé selon la revendication 4, **caractérisé en ce que** le point milieu correspond au passage par zéro.

**7.** Procédé selon l'une quelconque des revendications précédentes, **caractérisé en ce que** ladite sous partie a une durée prédéfinie inférieure ou égale à un quart de période du signal d'alimentation électrique alternatif.

**8.** Dispositif (4, 2) pour transmettre un signal de communication par courant porteur en ligne comprenant des données à transmettre, généré à partir d'un signal d'alimentation électrique alternatif et d'un signal représentatif desdites données, **caractérisé en ce que** le dispositif (4, 2) comprend:

un module d'analyse (44) pour obtenir une information représentative d'un instant ultérieur de passage par zéro du signal d'alimentation électrique alternatif ;
un module d'identification (53) pour identifier une sous partie du signal représentatif desdites données, ladite sous partie étant destinée à être combinée au signal d'alimentation électrique alternatif dans une fenêtre temporelle incluant ledit instant de passage par zéro ;
un module de modification (406, 45) pour modifier le signal représentatif desdites données en appliquant un gain prédéfini à ladite sous partie ;
un module de génération (43) pour générer le signal de communication par courant porteur en ligne.

**9.** Dispositif selon la revendication 8, **caractérisé en ce qu'**il comprend un module de conversion numérique vers analogique (41) situé en aval du module de modification (406) et recevant le signal représentatif des données modifié, ou un module de conversion numérique vers analogique (41) situé en amont du module de modification (45) et fournissant au module de modification (45) le signal représentatif des données sous forme d'un signal analogique issu d'une conversion d'un signal numérique représentatif des données.

**10.** Programme d'ordinateur, **caractérisé en ce qu'**il comprend des instructions pour mettre en oeuvre, par un dispositif (40), le procédé selon l'une quelconque des revendications 1 et 2 et 4 à 7 lorsqu'elles ne dépendent pas de la revendication 3, lorsque ledit programme est exécuté par un processeur (401) dudit dispositif (40).

**11.** Moyens de stockage, **caractérisés en ce qu'**ils stockent un programme d'ordinateur comprenant des instructions pour mettre en oeuvre, par un dispositif (40), le procédé selon l'une quelconque des revendications 1 et 2 et 4 à 7 lorsqu'elles ne dépendent pas de la revendication 3, lorsque ledit programme est exécuté par un processeur (401) dudit dispositif (40).

**Patentansprüche**

**1.** Verfahren zum Übertragen eines Signals für die Kommunikation über einen Leitungsträgerstrom, das zu übertragende Daten enthält und aus einem Wechselstrom-Versorgungssignal und einem Signal, das die Daten repräsentiert, erzeugt wird, **dadurch gekennzeichnet, dass** das Verfahren vor dem Erzeugen des Signals für die Kommunikation über einen Leitungsträgerstrom Folgendes umfasst:

Erhalten (50, 51) von Informationen, die einen späteren Zeitpunkt des Nulldurchgangs des Wechselstrom-Versorgungssignals repräsentieren;
Identifizieren (52, 53) eines Unterabschnitts des die Daten repräsentierenden Signals, wobei der Unterabschnitt dazu bestimmt ist, mit dem Wechselstrom-Versorgungssignal in einem Zeitfenster, das den Zeitpunkt des Nulldurchgangs enthält, kombiniert zu werden; und
Modifizieren (54) des die Daten repräsentierenden Signals durch Anwenden einer im Voraus definierten Verstärkung auf den Unterabschnitt.

**2.** Verfahren nach Anspruch 1, **dadurch gekennzeichnet, dass** das Verfahren außerdem eine Digital/Analog-Umsetzung des die Daten repräsentierenden Signals nach dem Anwenden der Verstärkung auf den Unterabschnitt umfasst.

**3.** Verfahren nach Anspruch 1, **dadurch gekennzeichnet, dass** das Verfahren außerdem einen Schritt der Digital/Analog-Umsetzung umfasst und dass das Anwenden der Verstärkung auf den Unterabschnitt nach der Digital/Analog-Umsetzung erfolgt, wobei das die Daten repräsentierende Signal ein analoges Signal ist, das sich aus der Digital/Analog-Umsetzung eines die Daten repräsentierenden digitalen Signals ergibt.

**4.** Verfahren nach Anspruch 1, 2 oder 3, **dadurch gekennzeichnet, dass** ein Wert der Verstärkung, die auf ein Element des Unterabschnitts angewendet wird, von einer Position des Elements in Bezug auf einen Mittelpunkt des Unterabschnitts abhängt, derart, dass ein erster Verstärkungswert, der auf ein erstes Element des Unterabschnitts angewendet wird, kleiner oder gleich einem zweiten Verstärkungswert ist, der auf ein zweites Element des Unterabschnitts angewendet wird, wenn das erste Element weiter als das zweite Element vom Mittelpunkt entfernt ist.

**5.** Verfahren nach Anspruch 4, **dadurch gekennzeichnet, dass** der Mittelpunkt zu dem Nulldurchgang um einen im Voraus definierten Wert versetzt ist.

**6.** Verfahren nach Anspruch 4, **dadurch gekennzeichnet, dass** der Mittelpunkt dem Nulldurchgang entspricht.

**7.** Verfahren nach einem der vorhergehenden Ansprüche, **dadurch gekennzeichnet, dass** der Unterabschnitt eine im Voraus definierte Dauer hat, die kleiner oder gleich einer Viertelperiode des Wechselstrom-Versorgungssignals ist.

**8.** Vorrichtung (4, 2) zum Übertragen eines Signals für die Kommunikation über einen Leitungsträgerstrom, das zu übertragende Daten enthält, die anhand eines Wechselstrom-Versorgungssignals und eines Signals, das Daten repräsentiert, erzeugt wird, **dadurch gekennzeichnet, dass** die Vorrichtung (4, 2) Folgendes umfasst:

ein Analysemodul (44) zum Erhalten von Informationen, die einen späteren Zeitpunkt des Nulldurchgangs des Wechselstrom-Versorgungssignals repräsentieren;
ein Identifizierungsmodul (53) zum Identifizieren eines Unterabschnitts des die Daten repräsentierenden Signals, wobei der Unterabschnitt dazu bestimmt ist, mit dem Wechselstrom-Versorgungssignal in einem Zeitfenster, das den Zeitpunkt des Nulldurchgangs enthält, kombiniert zu werden;
ein Modifikationsmodul (406, 45) zum Modifizieren des die Daten repräsentierenden Signals durch Anwenden einer im Voraus definierten Verstärkung auf den Unterabschnitt; und
ein Erzeugungsmodul (43) zum Erzeugen des Signals für die Kommunikation über den Leitungsträgerstrom.

**9.** Vorrichtung nach Anspruch 8, **dadurch gekennzeichnet, dass** sie ein Digital/Analog-Umsetzungsmodul (41) umfasst, das dem Modifikationsmodul (406) nachgeschaltet ist und das modifizierte Signal, das die Daten repräsentiert, empfängt, wobei das Digital/Analog-Umsetzungsmodul (41) dem Modifikationsmodul (45) vorgeschaltet ist und an das Modifikationsmodul (45) das Daten repräsentierende Signal in Form eines analogen Signals, das sich aus einer Umsetzung eines Daten repräsentierenden digitalen Signals ergibt, liefert.

**10.** Computerprogramm, **dadurch gekennzeichnet, dass** es Anweisungen enthält, um durch eine Vorrichtung (40) das Verfahren nach einem der Ansprüche 1 und 2 und 4 bis 7, wenn nicht abhängig von Anspruch 3, auszuführen, wenn das Programm durch einen Prozessor (401) der Vorrichtung (40) abgearbeitet wird.

**11.** Speichermittel, **dadurch gekennzeichnet, dass** sie ein Computerprogramm speichern, das Anweisungen enthält, um durch eine Vorrichtung (40) das Verfahren nach einem der Ansprüche 1 und 2 und 4 bis 7, wenn nicht abhängig von Anspruch 3, auszuführen, wenn das Programm durch einen Prozessor (401) der Vorrichtung (40) abgearbeitet wird.

## Claims

**1.** Method for transmitting a power-line communication signal comprising data to be transmitted, which signal is generated from an AC electrical power supply signal and from a signal representative of said data, **characterized in that** the method comprises, prior to the generation of the power-line communication signal:

obtaining (50, 51) an item of information representative of a subsequent instant of zero crossing of the AC electrical power supply signal;
identifying (52, 53) a subcomponent of the signal representative of said data, said subcomponent being intended to be combined with the AC electrical power supply signal in a time window including said instant of zero crossing;
modifying (54) the signal representative of said data by applying a predefined gain to said subcomponent.

**2.** Method according to Claim 1, **characterized in that** the method furthermore comprises a digital-to-analogue conversion of the signal representative of the data following the application of the gain to said subcomponent.

**3.** Method according to Claim 1, **characterized in that** the method furthermore comprises a digital-to-analogue conversion step, and **in that** the application of the gain to said subcomponent is performed after the digital-to-analogue conversion, the signal representative of said data being an analogue signal resulting from the digital-to-analogue conversion of a digital signal representative of said data.

**4.** Method according to Claim 1, 2 or 3, **characterized in that** a gain value applied to an element of said subcomponent depends on a position of said element with respect to a centre of said subcomponent, such that a first gain value applied to a first element of said subcomponent is lower than or equal to a second gain value applied to a second element of said subcomponent when the first element is further from said centre than the second element.

**5.** Method according to Claim 4, **characterized in that** the centre is shifted by a predefined value with respect to the zero crossing.

**6.** Method according to Claim 4, **characterized in that** the centre corresponds to the zero crossing.

**7.** Method according to any one of the preceding claims, **characterized in that** said subcomponent has a predefined duration of less than or equal to a quarter of the period of the AC electrical power supply signal.

**8.** Device (4, 2) for transmitting a power-line communication signal comprising data to be transmitted, which signal is generated from an AC electrical power supply signal and from a signal representative of said data, **characterized in that** the device (4, 2) comprises:

an analysis module (44) for obtaining an item of information representative of a subsequent instant of zero crossing of the AC electrical power supply signal;
an identification module (53) for identifying a subcomponent of the signal representative of said data, said subcomponent being intended to be combined with the AC electrical power supply signal in a time window including said instant of zero crossing;
a modification module (406, 45) for modifying the signal representative of said data by applying a predefined gain to said subcomponent;
a generation module (43) for generating the power-line communication signal.

**9.** Device according to Claim 8, **characterized in that** it comprises a digital-to-analogue conversion module (41) situated downstream of the modification module (406) and receiving the modified signal representative of the data, or a digital-to-analogue conversion module (41) situated upstream of the modification module (45) and supplying, to the modification module (45), the signal representative of the data in the form of an analogue signal produced by a conversion of a digital signal representative of the data.

**10.** Computer program, **characterized in that** it comprises instructions for implementing, using a device (40), the method according to any one of Claims 1 and 2 and 4 to 7, when they are not dependent on Claim 3, when said program is executed by a processor (401) of said device (40).

**11.** Storage means, **characterized in that** they store a computer program comprising instructions for implementing, using a device (40), the method according to any one of Claims 1 and 2 and 4 to 7, when they are not dependent on Claim 3, when said program is executed by a processor (401) of said device (40).

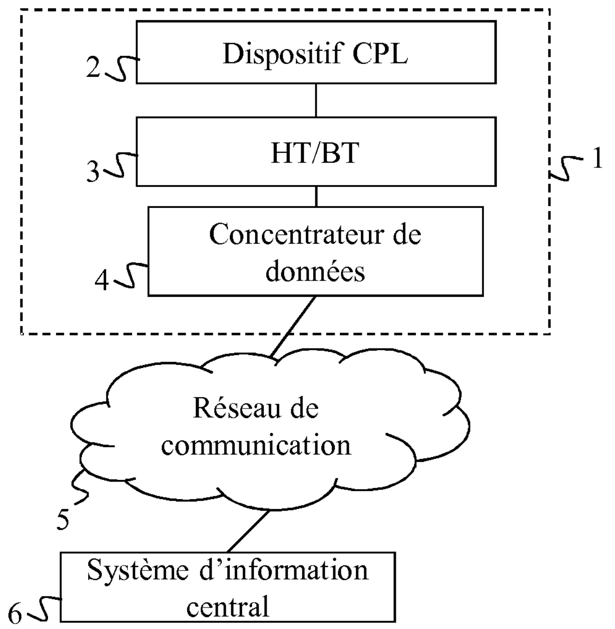
Dispositif CPL
2
HT/BT
3
1
Concentrateur de données
4
Réseau de communication
5
Système d'information central
6

Fig. 1

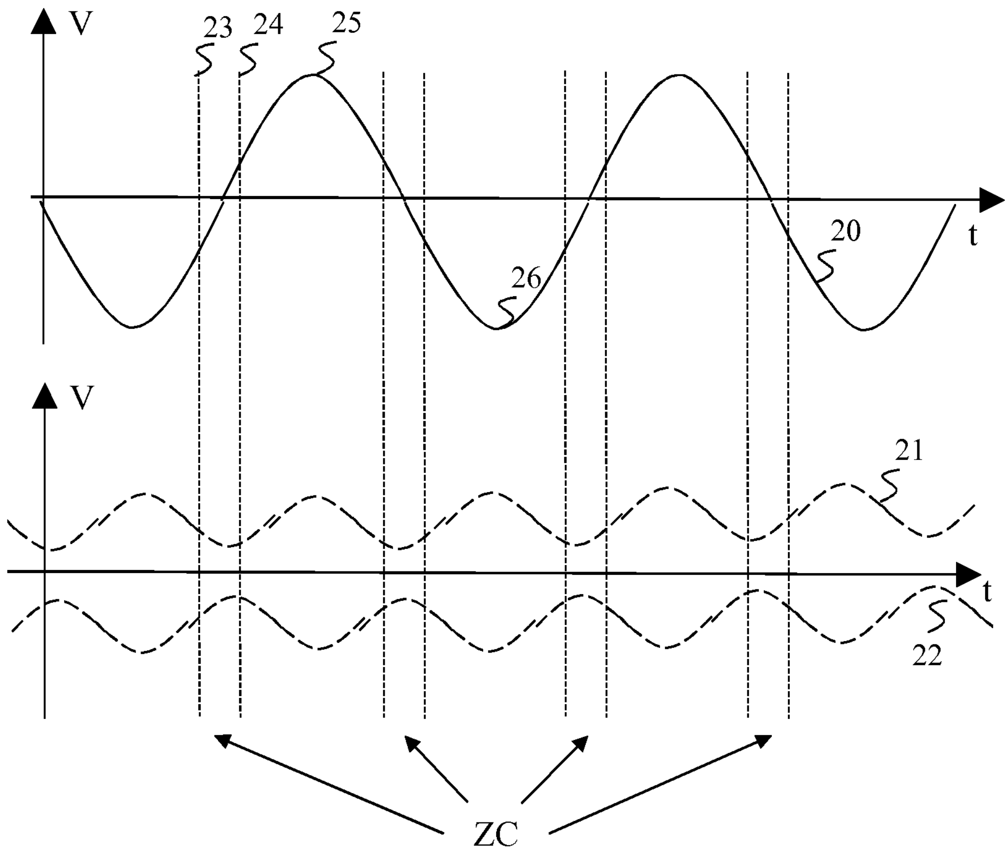
V
23
24
25
t
20
26
V
21
t
22
ZC

Fig. 2

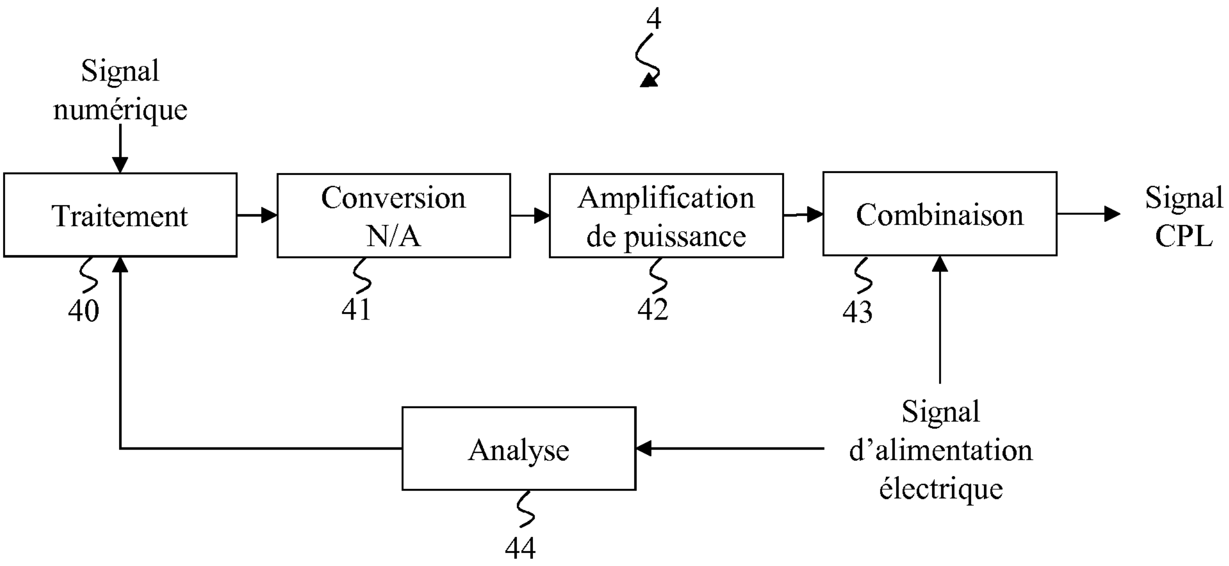
4
Signal numérique
Traitement
Conversion N/A
Amplification de puissance
Combinaison
Signal CPL
40
41
42
43
Signal d'alimentation électrique
Analyse
44

Fig. 3

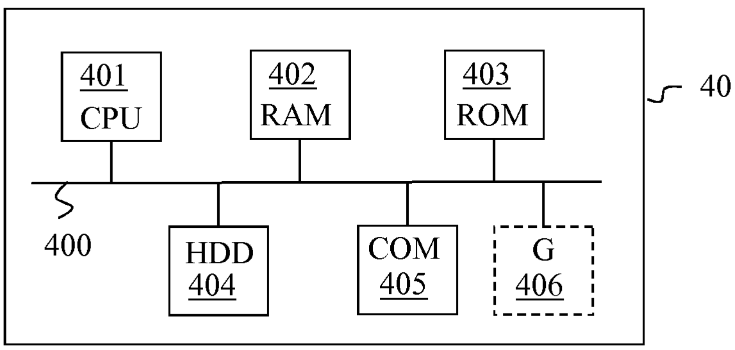
401 CPU
402 RAM
403 ROM
40
400
HDD 404
COM 405
G 406

Fig. 4

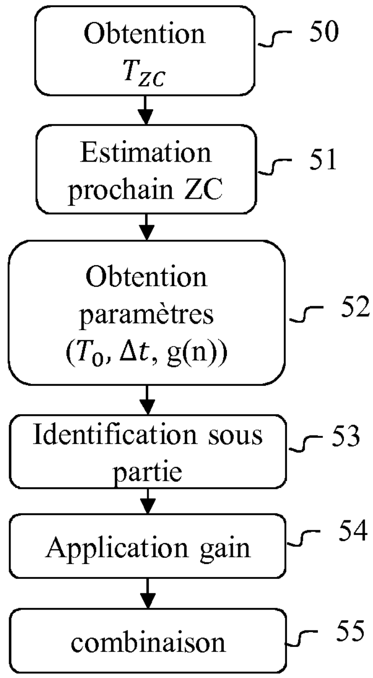
Obtention
$T_{ZC}$
50
Estimation prochain ZC
51
Obtention paramètres ($T_0$, $\Delta t$, g(n))
52
Identification sous partie
53
Application gain
54
combinaison
55

Fig. 5

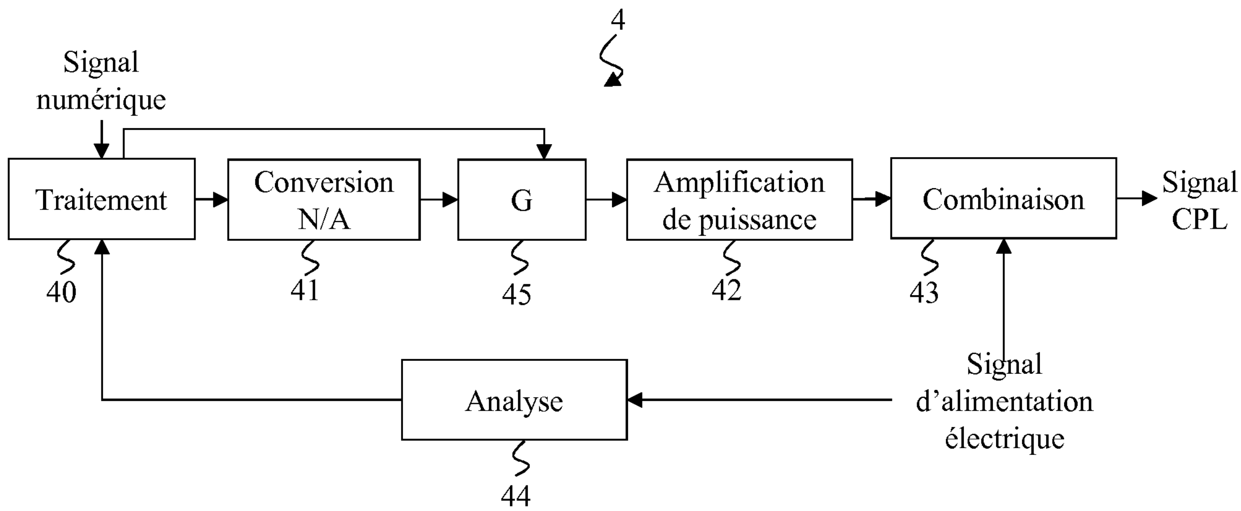
4
Signal numérique
Traitement
Conversion N/A
G
Amplification de puissance
Combinaison
Signal CPL
40
41
45
42
43
Analyse
Signal d'alimentation électrique
44

Fig. 6

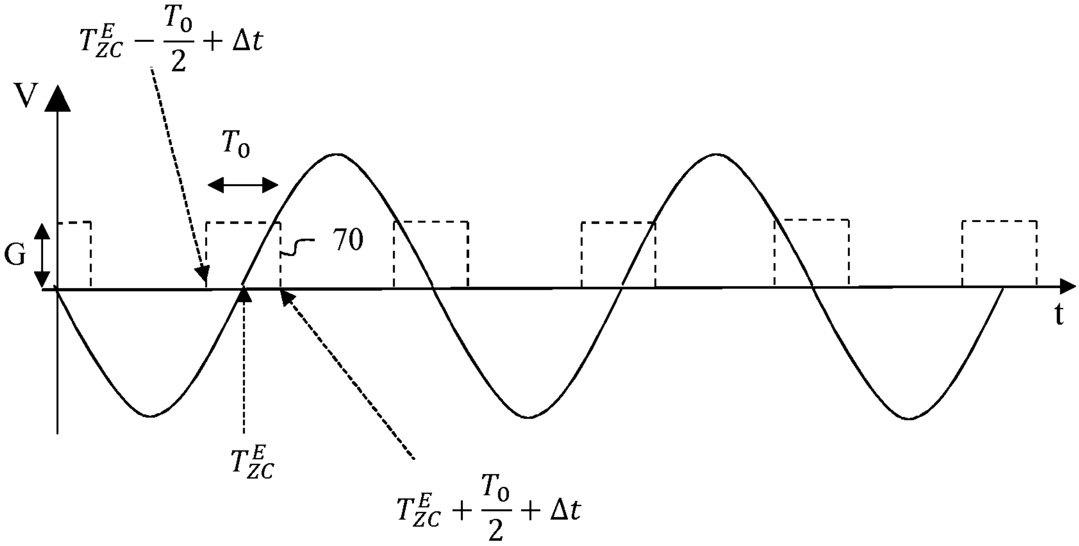


Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5777544 A